# EUROPEAN PATENT APPLICATION

(11) **EP 2 503 732 A1**
(43) Date of publication of application: **26.09.2012**
(21) Application number: 12158458.5
(22) Date of filing: 07.03.2012
(51) Int. Cl.: H04L 12/18

(54) **Transmission of content through access network**

(30) Priority: 24.03.2011 US 201113070944
(71) Applicant: Comcast Cable Communications, LLC, Philadelphia, PA 19103 (US)
(72) Inventor: Salinger, Jorge, Philadelphia, PA Pennsylvania 19103 (US)
(74) Representative: Jansen, Cornelis Marinus

(57) **Abstract**

A computing device in an access network is disclosed that transmits content including data blocks. For each multicast transmission over an access network, the computing device stores the data block of content currently being transmitted. As transmission of the next succeeding data block of content begins, the computing device replaces the previously stored data block of content with the next succeeding data block of content, such that the computing device continually stores and replaces successive data blocks of content in a multicast transmission. When the computing device receives from a new user device a request for the content that the computing device is already transmitting to other user devices, the computing device transmits in unicast to the requesting user device the data block of content currently being transmitted to the other user devices, which the computing device has stored. Following this unicast transmission, the computing device initiates a multicast transmission forwarding the content including the data blocks to the requesting user device.

## Description

### FIELD OF ART

Aspects of the disclosure generally relate to transmitting content over a network. More specifically, aspects of the disclosure relate to accelerating the transmission of streams of data blocks over a network.

### BACKGROUND

An important function of many information distribution networks is delivering data comprising various types of content (e.g., video, audio, multimedia, etc.) to premises of network users (e.g., consumers, customers, subscribers, viewers, clients, users, etc.). To conserve bandwidth and optimize various digital services, many types of content are often distributed to users in multicast data streams. Distributing content in multicast data streams allows the content to be delivered (or at least available) to large numbers of users simultaneously. Typically, many user devices in an access network may be simultaneously receiving numerous multicast data streams in different frequency bands and/or as separate encoded or compressed data transport streams within a particular frequency band. In the context of video and/or audio content, before a user device may begin decoding or other processing of data from a multicast stream, the user device typically may wait for a certain frame, an I-frame, to arrive in the stream that will allow the user device to generate audio and/or video output on an end device (e.g., a television, computer, display, mobile device, etc.). As a result, a delay in rendering such output can occur while the user device waits for an I-frame to arrive. The length of delay depends on the point at which the user device begins receiving the multicast stream.

Because users of information distribution networks are becoming more accustomed to high-quality programming and service, many users find such delay annoying or otherwise having a negative impact on their user experience. To address this problem, some network providers have implemented complex systems that rely on unicast transmission of data. Data transmitted in unicast (e.g., for video-on-demand (VOD) programming provided in content distribution networks) is normally addressed to a single user device in response to a specific request from that device, and thus unicast transmission is typically faster than multicast transmission since there is no need for the user device to wait for an I-frame to arrive before rendering the requested content to the user. However, the systems implemented to avoid the potential delay associated with multicast transmission require user interaction, additional software in the user device and a special server to handle requests for unicast data streams from user devices. Also, scaling becomes an issue with such systems since the need for additional servers is tied to user growth.

### SUMMARY

The following presents a simplified summary of the present disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

In some arrangements described herein, an access network server may transmit multicast data blocks, which may include video, audio, multimedia, software and other such data and content, to numerous user or remote (e.g., subscriber) devices in the network. One such arrangement may include an edge device, such as a termination system (TS) (e.g., a cable modem termination system in a television distribution system, a digital subscriber line access multiplexer (DSLAM) in a digital subscriber line (DSL) system, etc.) that transmits multicast data blocks to multiple remote devices (e.g., cable modems, DSL modems, etc.) in a communication network. In one implementation the communication network may be a hybrid fiber coaxial (HFC) communication network that complies with one or more Data Over Cable System Interface Specification (DOCSIS) standards promulgated by Cable Television Laboratories, Inc. (CableLabs®).

For each multicast data stream being transmitted over the access network, the server may store the data block currently being transmitted over the access network for that stream. As transmission of the next succeeding data block of the stream begins, the server replaces the previously stored data block with the next succeeding data block, such that the server continually stores and replaces successive data blocks of a multicast data stream while that stream is being transmitted to at least one user over the access network. When the server receives from a new user device a request for a data stream that the server is already transmitting in multicast to other user devices, the server transmits in unicast to the requesting user device the data block currently being transmitted to the other user devices, which the server has stored. Following this unicast transmission of the data block currently being transmitted, the server forwards the requested data stream to the requesting user device.

Accordingly, one or more aspects of the various embodiments described herein relate to the server, or another device, transmitting in unicast a data block of requested data to the user device, followed by the server instructing the user device to join a multicast stream of the requested data. In other words, the user such as a modem (e.g., a cable modem or DSL modem), or other type of device may not be required to send the server a first communication requesting a unicast stream of the desired data, and then send the server a second communication requesting permission to join a multicast stream of the desired data. Instead, the server may be in control of both the unicast transmission of the currently transmitted data block stored for the requested data and the multicast transmission of the requested data stream. Thus, the server may control and manage the splice point between the unicast data block transmission and the multicast data stream transmission. In such an arrangement no additional software is required at the user's location or premises because the user is not aware of the event or transition from the unicast transmission of the data block to the multicast transmission of the data stream.

The server to implement one or more of the arrangements described herein may be any of a number of different types of edge devices associated with different types of networks. For example, in an access network such as an HFC access network that complies with one or more standards, for example the DOCSIS standards promulgated by CableLabs®, a TS may be used to communicate with many user devices. The server used to implement various aspects described herein may include some additional memory to support the temporary storage of the currently transmitted data block provided by each data stream being transmitted by the server in multicast to user devices in the network. Other than a small amount of additional memory, however, the server will not require any additional software or hardware, and therefore may implement certain aspects of the disclosure in a scalable fashion.

### BRIEF DESCRIPTION OF THE DRAWINGS

A more complete understanding of aspects of the present disclosure and the advantages thereof may be acquired by referring to the following description in consideration of the accompanying drawings, in which like reference numbers indicate like features, and wherein:
Figure 1 illustrates an example information distribution network according to one or more aspects described herein;
Figure 2 is a partially schematic block diagram of an example Edge Device according to one or more aspects described herein;
Figure 3 is a flowchart showing example operations performed by an Edge Device according to one or more aspects described herein; and
Figure 4 illustrates an example information flow diagram showing communications in an access network according to one or more aspects described herein.

### DETAILED DESCRIPTION

In the following description of various illustrative embodiments, reference is made to the accompanying drawings, which form a part hereof, and in which is shown by way of illustration various embodiments in which one or more aspects of the disclosure may be practiced. It is to be understood that other embodiments may be utilized and structural and functional modifications may be made without departing from the scope of the present disclosure.

One or more arrangements describe a packet data network using internet protocol (IP) to deliver data for various types of content to user or network devices located at user premises or at a remote location (e.g., mobile devices). It will be appreciated that aspects disclosed herein may be incorporated in other types of networks and that a packet data network is an example embodiment. As used herein, "content" may include video images, audio sounds, multimedia and/or other forms of information that can be encoded into data for communication to a user device and then decoded so as to be displayed or otherwise conveyed in human-understandable form. Content may include, but is not limited to, video programming (e.g., television) and other types of audio and video communications that are simultaneously delivered to numerous individual user locations over one or more access networks. A "service" may be a transmission (e.g., stream) of data (e.g., data blocks or packets for a sequence of programming associated with a content entity or other specific source). A "user device" may be a device located at a user premises, or a mobile device, that communicates across an access network. Some types of user devices (e.g., a Set Top Terminal (STT), cable modem, DSL modem, etc.) receive data over a network and output that data in a form usable by another device (e.g., a display such as a television, a computer, a local network router) that may or may not be located at the user premises.

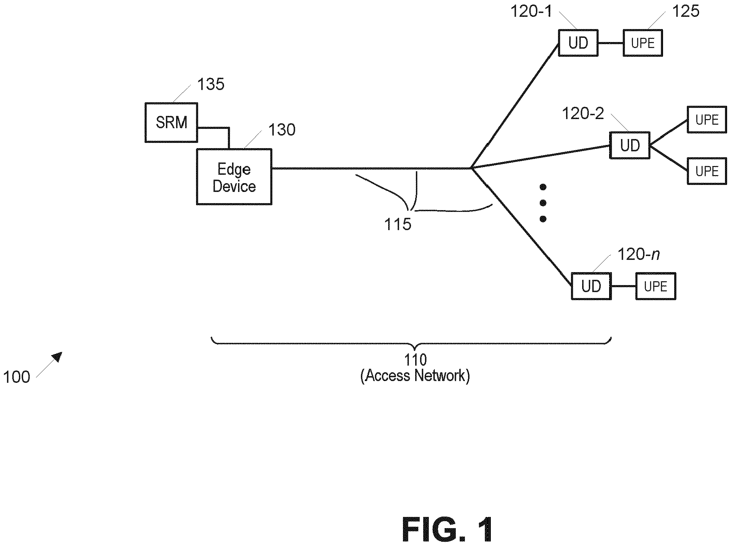

FIG. 1 illustrates an example information distribution network 100 that includes an access network 110 implementing techniques and devices according to at least some embodiments. Network 100 may be any of numerous types of information distribution networks, such as satellite, optical fiber, coaxial cable, hybrid fiber optic coaxial (HFC), wireless, etc. Additionally, network 100 may be a packet data network using internet protocol ("IP network"), which may be found, for example, in many fee-based television and media distribution networks. Although an IP network employs internet protocol, an IP network is not synonymous with the Internet (with a capital "I," sometimes known as the "public Internet"). Although an IP network may include portions that utilize the public Internet for some links, an IP network may also be a completely private network. Embodiments include networks using one or more different versions of internet protocol (e.g., IPv4 and IPv6). The IPv4 and IPv6 protocols are well-known and described, e.g., in numerous publications available from the Internet Engineering Task Force (IETF).

The operator of network 100 may provide users with high speed data communication (e.g., access to the public Internet) and may deliver numerous types of multicast and unicast data blocks, which may include multiple different forms of content including video, audio, multimedia, software, and any other forms of data that can be transmitted to multiple users in a simultaneous manner, as will be described in greater detail herein. Accordingly, given the various forms of content that may comprise the data blocks delivered to users over access network 110, the data blocks may contain data such as video content frames, groups of pictures, software modules, prepositioned cache content, web objects and the like. Access network 110, if employed in an HFC-type network, may be compliant with one or more DOCSIS standards. Access network 110 may include a plant 115 that employs a series of interconnected coaxial cables, fiber optic cables, wireless links or any other desired physical transmission medium. Electro/optical nodes, splitters, amplifiers and various other well known network elements are omitted from FIG. 1 for convenience. Access network 110 may further include an Edge Device 130 that connects access network 110 with the core of network 100 and the back office of the operator of network 100. In one arrangement, access network 110 may be an HFC-type network, in which case access network 110 may include a TS (termination system (e.g., a cable modem termination system)) as Edge Device 130. In other arrangements, access network 110 may be a digital subscriber line (DSL) network with Edge Device 130 being a digital subscriber line access multiplexer (DSLAM). In still other arrangements, access network 110 may be a passive optical network (PON) in which Edge Device 130 is an optical line terminal (OLT). It should be understood that access network 110 may alternatively be any of a number of other types of networks in which the data communicated via the network is of a form that can be transmitted to multiple users in a simultaneous manner, and therefore Edge Device 130 may be any of the numerous types of edge devices associated with such other networks.

As illustrated in FIG. 1, Edge Device 130 forwards certain types of data blocks or data packets between user devices (e.g., UD 120-1, UD 120-2, etc.) and other devices in access network 110 and devices outside of access network 110. In some arrangements, multicast and unicast data blocks may pass through Edge Device 130 for delivery to user devices, while in other arrangements unicast data blocks may pass through Edge Device 130 while multicast data blocks may bypass Edge Device 130. Additionally, in at least some arrangements, Edge Device 130 may also control use of access network 110 using various access control protocols (e.g., media access control (MAC) protocols) and may perform other operations of a conventional termination system (e.g., a DOCSIS TS). For example, in an arrangement where Edge Device 130 is a TS, Edge Device 130 may encapsulate unicast data packets in MAC frames and forward those frames to user devices.

In an example arrangement where access network 110 is an HFC-type network, and therefore Edge Device 130 may be a TS, Edge Device 130 may be an integrated termination system (I-TS) or may be a modular termination system (M-TS) connected via an interface to an edge quadrature amplitude modulation (EQAM) device (not shown). In such an arrangement, the EQAM device may receive data packets and digitally modulate those packets onto downstream RF carriers over plant 115 to multiple user devices (UD) 120-1 through 120-n. For purposes of example, "n" is an arbitrary number. Each of user devices 120-1 through 120-n which may be, for example, a display device, a Set Top Terminal (STT), cable modem (CM), DSL modem, or any other type of device associated with the particular type of access network 110 involved, may communicate with one or more user premises equipment (UPE) devices 125. UPE devices 125 may be any of a variety of different types of end devices located at user premises to which user devices 120-1 through 120-n may generate output (e.g., video, audio, multimedia, etc.), such televisions, computers, local area network routers, etc. UPE devices 125 and user devices 120 may be combined into one device. User devices 120-1 through 120-n may also communicate data upstream to Edge Device 130 over plant 115. In some arrangements, upstream communications from user devices 120-1 through 120-n may be received directly by Edge Device 130 and, where Edge Device 130 is a conventional termination system (e.g., a TS), demodulated at Edge Device 130. In an example arrangement in which Edge Device 130 may be an M-TS, upstream user device communications may be received and demodulated by an EQAM device and then forwarded to the Edge Device 130.

Also shown in FIG. 1 are several elements of network 100 located outside of access network 110. For example, Edge Device 130 may communicate with a session resource manager (SRM) 135, which, as described in greater detail below, may provide Edge Device 130 with a multicast stream identifier to be included in downstream data blocks of a service requested by user devices 120-1 through 120-n. For example, in an arrangement where access network 110 is an HFC-type network, SRM 135 may provide Edge Device 130 (which may be a termination system (TS) such as a cable modem termination system) with a Downstream Service Identifier (DSID) to be included in downstream encapsulated data packets that include multicast data blocks of a service requested by user devices 120-1 through 120-n. Although not shown in FIG. 1, network 100 may include one or more local, regional, national and/or international IP networks linked to Edge Device 130. Moreover, network 100 may include multiple additional access networks and/or access sub-networks that may be similar to access network 110 and that operate in a manner such as described herein. As mentioned above, various other network elements and devices may be located outside of access network 110 or elsewhere in network 100. Because the operation of such elements and devices is known or would be readily apparent to a person of ordinary skill in light of the disclosures herein, such elements and devices are not shown in FIG. 1 or further discussed.

In some arrangements, Edge Device 130 may also communicate with other network elements in addition to or instead of those illustrated in FIG. 1. For example, Edge Device 130 may communicate with one or more data sources via network 100, and such data sources may be located within network 100 or may be external to network 100. In some cases, a data source may be a single server. In other cases, a data source may be a data distribution center controlled by the operator of network 100 or by another entity. One example of a data source may include a regional or national hub where the operator of network 100 receives programming or content data from multiple sources (e.g., fee-based programming service providers, broadcast networks, local television stations, etc.) via various mechanisms (e.g., satellite downlink, data feed over a separate network, etc.) and then distributes that data to user devices 120-1 through 120-n in network 100. Another example of a data source may include a point of presence (POP) maintained by the operator of network 100 in a facility operated by a single program service provider (e.g., a headend of an HFC programming service provider), local provider or broadcast network. Yet another example may be a provider of Pay Per View (PPV) or premium programming.

In at least some embodiments, data blocks from data sources may be distributed in network 100, using IP multicast techniques, for example, to a large number "n" (thousands, hundreds of thousands, or even millions) of individual user devices 120-1 through 120-n. For each service, IP data packets containing encoded data blocks are assigned a corresponding multicast destination IP address. User devices in network 100 may receive data blocks of a particular service by "joining" a group of user devices (the "multicast group") to which data blocks having the multicast destination IP address of that service are forwarded. A user at a user premise who wishes to view data blocks of a service provides an appropriate input. In response to that user's input, a user device (e.g., 120-1) at the user premises may send a request to Edge Device 130 that seeks membership in a multicast group corresponding to the desired service. A user may input a desired television channel number into a STT using a remote control, for example. The STT may then generate the appropriate membership request and forward the same to a TS of the network. A user input might also be received by a separate UPE device in a local network with a user device 120-1. For example, a user may enter an identifier of desired data blocks into an application program executing on a computer. The computer may then generate the membership request and communicate the request to Edge Device 130 through a user device (e.g., user device 120-1).

In one or more embodiments, Edge Device 130 may store a data block of a service being forwarded using IP multicast techniques to one or more user devices 120-1 through 120-n in access network 110. Specifically, Edge Device 130 may store IP data packets for each service currently being transmitted in multicast, where the IP data packets stored by Edge Device 130 for each service correspond to the data block currently being forwarded to user devices 120-1 through 120-n belonging to the multicast group receiving the service. According to various aspects described herein, Edge Device 130 may continuously replace and update the stored data block for each service being transmitted in multicast such that memory requirements of Edge Device 130 are kept to a minimum.

As explained in further detail below, a request from a user device, such as user device 120-1, is received for membership in a multicast group for a particular service that is already being transmitted by Edge Device 130 to other user devices. Edge Device 130 may forward the data block currently being transmitted to the other user devices, which Edge Device 130 currently has stored. Then, Edge Device 130 may instruct user device 120-1 to join that multicast group by providing user device 120-1 with a multicast stream identifier (e.g., a DSID in the case of an HFC-type access network 110) corresponding to that multicast group. In some embodiments, Edge Device 130 may include the multicast stream identifier together with IP data packets for the corresponding service, which Edge Device 130 may then forward across access network 110. The requesting user device 120-1 can then filter downstream data packets in access network 110 based on the multicast stream identifier and identify data blocks for the desired service. Additional aspects of content delivery in access network 110 are described below.

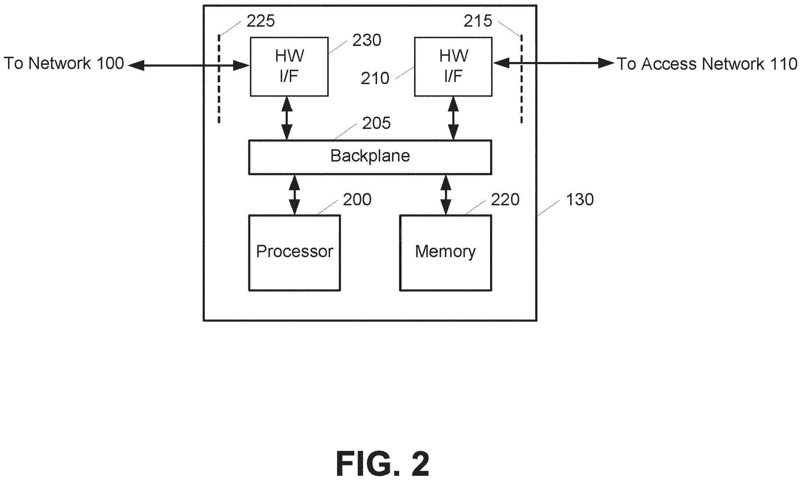

FIG. 2 is a partial schematic block diagram of an example Edge Device 130 according to at least some embodiments. A processor 200 may execute instructions and control operation of Edge Device 130 so as to carry out operations described herein. Edge Device 130 may further include memory 220 storing instructions for execution by processor 200 as well as other data that is stored and/or retrieved by processor 200. For example, memory 220 may be used to store, in a replaceable manner, data blocks currently being transmitted to user devices 120-1 through 120-n. Processor 200 may access memory 220 via one or more data busses in a backplane 205. Although single blocks are shown for processor 200 and for memory 220, memory and computational operations of Edge Device 130 could respectively be distributed across multiple memory devices and multiple processors. Accordingly, a reference to "a processor" or to "a memory" encompasses a processor or a memory implemented by multiple discrete components. Memory 220 may include volatile and non-volatile memory and can include any of various types of storage technology, including one or more of the following types of storage devices: read only memory (ROM) modules, random access memory (RAM) modules, magnetic tape, magnetic discs (e.g., a fixed hard disk drive or a removable floppy disk), optical disk (e.g., a CD-ROM disc, a CD-RW disc, a DVD disc), flash memory, and EEPROM memory. Processor 200 may be implemented with any of numerous types of devices, including but not limited to one or more general purpose microprocessors, one or more application specific integrated circuits, one or more field programmable gate arrays, and combinations thereof. In at least some embodiments, processor 200 carries out operations described herein according to machine readable instructions stored in memory 220 and/or stored as hardwired logic gates within processor 200.

Edge Device 130 may communicate with SRM 135 and other elements of network 100 over a network-side interface 225, and Edge Device 130 may communicate with user devices 120 over an access-side interface 215. Interfaces 215 and 225 may respectively include hardware interface cards 106 and 107 providing physical ports for connection of Edge Device 130 to other elements of network 100 and access network 110. Hardware interface cards 210 and 230 could be, e.g., Gigabit Ethernet cards. Processor 200 sends data and instructions to and receives data from interface cards 210 and 230 via backplane 205. In some embodiments, Edge Device 130 may include multiple hardware interface cards on network-side interface 225 and/or on access-side interface 215, with hardware switches, buffers and other components interposed between the hardware interface cards and backplane 205. In at least one embodiment of FIG. 2, where, for example, access network 110 is an HFC-type network, Edge Device 130 may include a demodulator and other hardware components so as to receive upstream communications directly from user devices 120-1 through 120-n. In other embodiments, Edge Device 130 may instead receive upstream communications from user devices 120 over interface 215 via an EQAM device.

In at least some arrangements, Edge Device 130 may process certain unicast data traffic in a conventional manner as described by specifications, such as DOCSIS specifications, perform control protocol functions (e.g., MAC control protocol functions) as defined in particular specifications, and perform other conventional termination system (TS) operations. In other embodiments, as indicated above, multicast data may not flow through Edge Device 130, but instead may bypass Edge Device 130. In such embodiments, multicast data may flow through an EQAM device, with Edge Device 130 controlling the flow of the data.

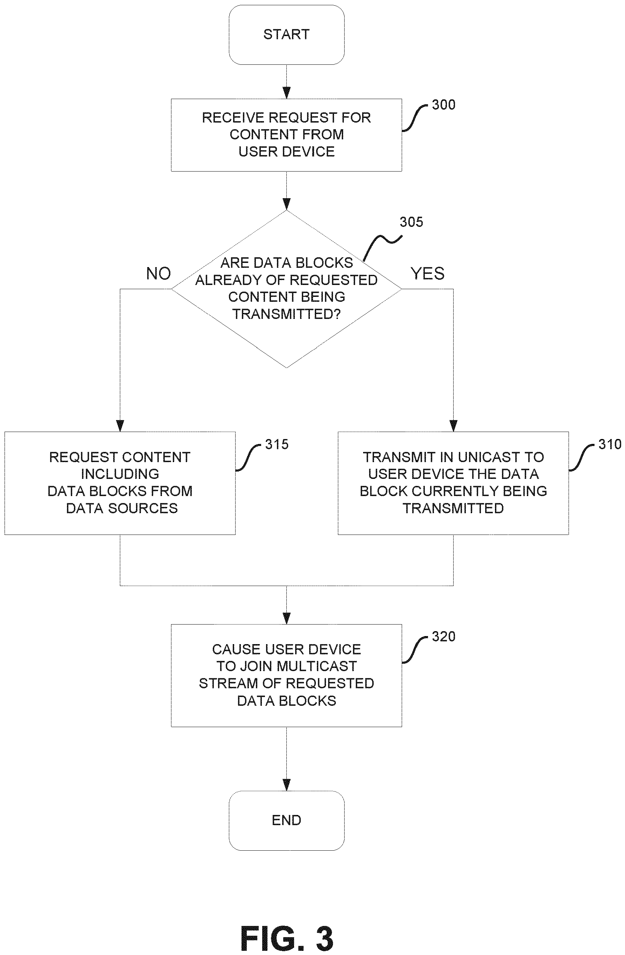

FIG. 3 is a flow chart illustrating operations that may be performed by Edge Device 130 according to at least some arrangements described herein. The steps of FIG. 3 may be carried out by processor 200 of Edge Device 130 according to instructions stored in memory 220 as executable code and/or according to hardwired logic instructions within processor 200, for example.

Edge Device 130 may receive at step 300 a request for content including data blocks (e.g., request for a multicast transmission) from a user device (e.g., UD 120-1 in FIG. 1) over access network 110. At step 305, Edge Device 130 determines if the requested data blocks of the content are already being transmitted to other user devices in access network 110. It will be appreciated that the Edge Device 130 may keep track of the current data block of content being transmitted to at least one other user device. As keeping track of all content streams being transmitted to other user devices may quickly become resource intensive, the content streams which the Edge Device 130 actually tracks can be limited to a certain number, for example those content streams that are popular. An algorithm may be utilized by the Edge Device 130 to determine which content (e.g., content streams) or data blocks to track. If, at step 305, Edge Device 130 determines that the requested data blocks of the content are not already being transmitted to other user devices over access network 110, then the process proceeds to step 315, where Edge Device 130 causes (e.g., enables or requests) the content including data blocks to be multicast from one or more data sources which, as described above with reference to FIG. 1, may be located within network 100 or may be external to network 100. The data source may be a single server or, instead may be a data distribution center controlled by the operator of network 100 or by another entity. In one or more arrangements, Edge Device 130 may request the content from a regional or national hub where the operator of network 100 receives programming data from multiple data sources, e.g., programming service providers, broadcast networks, local television stations, and the like. As described above, such programming data may be received via satellite downlink, data feed over a separate network and/or other various mechanisms.

If at step 305, Edge Device 130 instead determines that the requested data blocks of content are already being transmitted to other user devices over access network 110, then the process proceeds to step 310, where Edge Device 130 transmits in unicast to the user device, the data blocks currently being transmitted to other user devices. As described herein, when data blocks are already being transmitted to user devices over access network 110, the Edge Device 130 may store (e.g., in memory 220 of Edge Device 130) the data blocks currently being transmitted such that in step 310, Edge Device 130 may transmit the stored data blocks to the requesting user device in a unicast stream, which results in the transmission of data in an accelerated manner. The data block is transmitted to the requesting user device to ensure that the Edge Device 130 does not fall behind in the current transmission of data blocks to other user devices that were already receiving the requested data blocks. Additionally, as described in greater detail below, Edge Device 130 only stores the data blocks currently being transmitted to user devices. Therefore, Edge Device 130 continually replaces one of the stored data blocks with the next succeeding data block as the next succeeding data block begins to be transmitted over access network 110 to the user devices.

Following either of steps 315 and 310, the process continues to step 320 where Edge Device 130 commands or otherwise enables the requesting user device to join the multicast stream of the requested data blocks. In other words, whether Edge Device 130 has just caused the content for the requested data blocks to be received from data sources in a multicast transmission in step 315 or, instead, is already transmitting the multicast stream over access network 110 and has just transmitted the current data block in unicast in step 310, Edge Device 130 commands or otherwise enables the user device to join the multicast stream in step 320. In one arrangement, Edge Device 130 commands the user device to join the multicast stream of the requested data block by sending the user device a multicast stream identifier (e.g., a DSID in the case of HFC-type networks) that the user device may use to identify data packets of the current multicast group including data (e.g., GOPs, frames, etc.) of the requested data blocks of content. As mentioned, in an arrangement where access network 110 is an HFC-type network, the multicast stream identifier may be a DSID that will be included in MAC frames encapsulating IP packets of the current multicast group. The command by Edge Device 130 in step 320 to the user device may also include the downstream RF frequency over which the service data associated with the multicast group will be transmitted. The manner in which Edge Device 130 chooses the downstream frequency can be performed according to any desired access network management scheme.

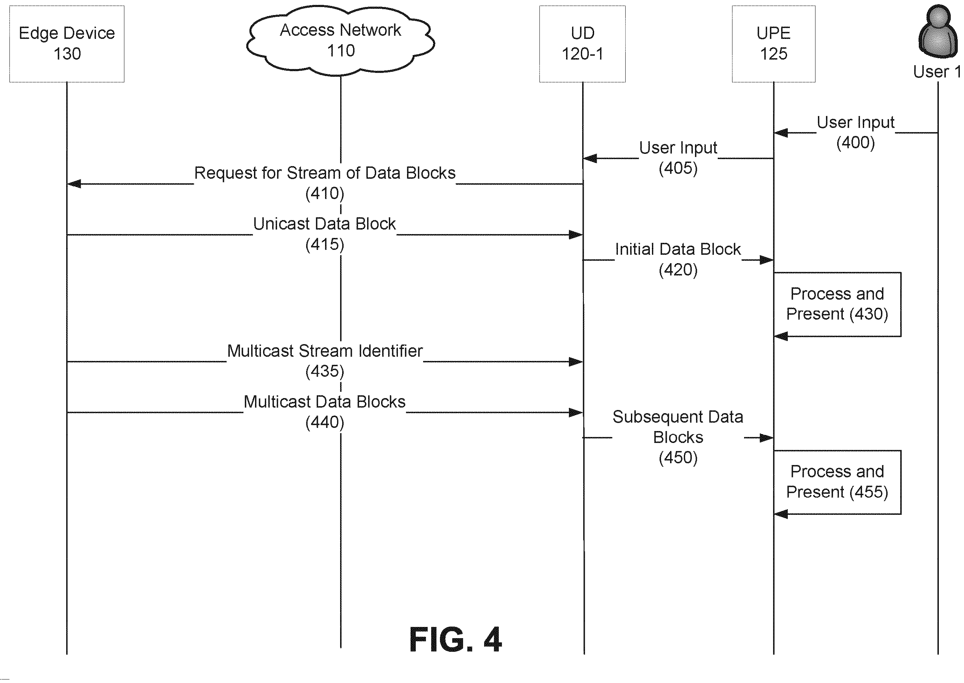

FIG. 4 is an information flow diagram showing an example sequence of communications in access network 110. The example of FIG. 4 assumes that UPE device 125 is any of a variety of end devices (e.g., television, computer monitor, multimedia player, mobile phone, etc.) located at user premises configured to display or otherwise convey decoded data blocks in human-understandable form. FIG. 4 also assumes a user 1 of UPE device 125 wishes to receive selected content and that the data blocks for that selected content are part of multicast service "A." FIG. 4 further assumes that user 1 is not the first user in access network 110 attempting to receive service A, but rather service A is already being transmitted across access network 110 to at least one other user of access network 110. As such, FIG. 4 also assumes that Edge Device 130 is continuously storing the data blocks of multicast service A currently being transmitted across access network 110, as well as, replacing such stored data block with the next succeeding data block of multicast service A, as the next succeeding data block begins transmission over access network 110.

Beginning at line 400, user 1 provides input to UPE device 125 selecting service A. For example, user 1 may input a desired television channel number into the UPE device, (e.g. a STT or television) using a remote control. In response to the input from user 1, UPE device 125 passes the user input, selecting service A, to user device 120-1 in line 405 (if UPE device 125 and user device 120-1 are separate devices). Upon receiving the user input from the UPE device 125, user device 120-1 generates a message requesting the content for service A (e.g., requesting a multicast stream of data blocks of the content associated with a specific entity or data source), and transmits this request upstream to Edge Device 130 (line 410). In some embodiments, user device 120-1 may, at line 410 identify the multicast group corresponding to service A and generate a message requesting membership in that multicast group, which user device 120-1 then transmits upstream in the same manner as described above.

In response to receiving the request for service A, Edge Device 130 may at line 415 transmit in unicast the data block of service A currently being transmitted to one or more user devices over access network 110. In particular, Edge Device 130 determines the data block currently being transmitted over access network 110 at the time the request from the user device (line 410) is received, and transmits that data block, which Edge Device 130 has stored (e.g., in memory 220 of Edge Device 130 shown in FIG. 2), in unicast to the user device 120-1 (line 415). User device 120-1, upon receiving the unicast data block transmission, then transmits this initial data block to UPE device 125 for processing and presentation to the user (e.g., on a display device of the user) (lines 420 and 430). The transmission from user device 120-1 to UPE device 125 in line 420 is referred to as initial data block because once the user device 120-1 receives the unicast data block transmission from the Edge Device 130 (line 415), the user of UPE device 125 does not notice any difference between what has been received from the user device 120-1 in line 420 and what the UPE device 125 later receives from the user device 120-1 in line 450, which will be described in greater detail below.

At line 435, Edge Device 130 forwards to the user device 120-1 a multicast stream identifier (e.g., a DSID in the case of video multicast for an HFC-type access network) that identifies to the user device 120-1 the multicast group associated with service A. After forwarding the multicast stream identifier for service A, in line 440 Edge Device 130 continues transmitting multicast data blocks over access network 110 as done prior to receiving the request from the user device 120-1 in line 410. Accordingly, user device 120-1 receives the multicast data blocks using the identifier received from Edge Device 130, and forwards the data blocks to UPE device 125 for processing and presenting to the user (lines 450 and 455). As discussed above, UPE device 125 does not notice any difference between the data block forwarded from user device 120-1 in line 420, which is referred to in FIG. 4 as "Initial Data Block," and any data blocks forwarded from the user device 120-1 in line 450, which are referred to in the plural as "Subsequent Data Blocks" to illustrate that lines 440 and 450 are repeatedly indefinitely (or at least until there are no longer any users requesting to receive service A).

As indicated above, various embodiments described herein may be implemented in networks having DOCSIS-compliant HFC access networks or any other type of network. An example of such other access networks includes an access network that uses satellite or other types of wireless delivery. Although some of the foregoing illustrative embodiments have been described as employing a TS and EQAM devices, these and other embodiments may also be implemented using other types of termination systems and edge devices, as mentioned.

Embodiments of the invention include a machine readable storage medium (e.g., a CD-ROM, CD-RW, DVD, floppy disc, FLASH memory, RAM, ROM, magnetic platters of a hard drive, etc.) storing machine readable instructions that, when executed by one or more processors, cause a network device to carry out operations such as are described herein. As used herein (including the claims), a machine-readable storage medium is a physical structure that can be touched by a human. A modulated signal would not by itself constitute a machine-readable storage medium.

The foregoing description of embodiments has been presented for purposes of illustration and description. The foregoing description is not intended to be exhaustive or to limit embodiments of the present invention to the precise form disclosed, and modifications and variations are possible in light of the above teachings or may be acquired from practice of various embodiments. The embodiments discussed herein were chosen and described in order to explain the principles and the nature of various embodiments and their practical application to enable one skilled in the art to utilize the present invention in various embodiments and with various modifications as are suited to the particular use contemplated. The features of the embodiments described herein may be combined in all possible combinations of methods, apparatuses, modules, systems, and machine-readable storage media. Any and all permutations of features from the above-described embodiments are the within the scope of the invention.

The various examples described above are, as stated, merely examples. Many variations may be implemented to suit a particular implementation, and the various features may be combined, divided, rearranged, omitted and/or augmented as desired. The scope of this patent should not be limited by any of the specific examples described herein.

## Claims

1. A method comprising:
transmitting, by a computing device, content comprising data blocks using a multicast process to a first user device in communication with the computing device over an access network;
tracking, by the computing device, a data block of the content currently being transmitted to the first user device;
receiving, at the computing device, a request for the content including the data blocks from a second user device in communication with the computing device over the access network, the second user device being different from the first user device;
transmitting, by the computing device, the data block of the content currently being transmitted to the first user device, to the second user device as an initial data block using a unicast process; and
responsive to transmitting the data block of the content as the initial data block to the second user device using the unicast process, the computing device transmitting the content including the data blocks subsequent to the initial data block using the multicast process to the second user device.

2. The method of claim 1, wherein transmitting the content including the data blocks using the multicast process includes:
transmitting, by the computing device, a multicast identifier to the user devices, the multicast identifier identifying a multicast group receiving the data blocks of the content over the access network from the computing device.

3. The method of claim 2, wherein the multicast identifier is a Downstream Service Identifier (DSID), the multicast group is an Internet Protocol (IP) multicast group, and the data blocks of the content are IP packets.

4. The method of any of the preceding claims, wherein the data blocks of the content are comprised of one or more of: video content, audio content, multimedia content, software modules, web objects, and prepositioned cache content.

5. The method of any one of the preceding claims, wherein the computing device is one of a Termination System, a digital subscriber line access multiplexer, and an optical line terminal.

6. The method of any one of the preceding claims, wherein the access network is one of a Hybrid Fiber Coaxial network, a digital subscriber line network, and a passive optical network.

7. The method of any one of the preceding claims, wherein transmitting, by the computing device, the data block of the content currently being transmitted to the first user device as the initial data block, to the second user device using a unicast process includes:
encapsulating, by the computing device, unicast data packets associated with the data block of the content currently being transmitted according to a control protocol; and
transmitting, by the computing device, the encapsulated unicast data packets to the second user device.

8. The method of claim 2, wherein tracking, by the computing device, the data block of the content currently being transmitted in the content including the data blocks to the first user device includes:
storing, at the computing device, a copy of the data block of the content currently being transmitted in the data blocks of the content to the first user device; and
responsive to the data block of the content being transmitted to the first user device, replacing the stored copy of the data block of the content with a copy of a next data block of the content being transmitted in the data blocks of the content to the first user device.

9. A system, comprising:
a computing device having at least one memory and at least one processor configured to access the at least one memory, wherein the computing device is configured to:
transmit content including data blocks using a multicast process to a first user device in communication with the computing device over an access network;
track a data block of the content currently being transmitted to the first user device;
receive a request for the content from a second user device in communication with the computing device over the access network, the second user device being different from the first user device;
transmit the data block of the content currently being transmitted to the first user, to the second user device as an initial data block using a unicast process; and
responsive to transmitting the data block of the content as the initial data block to the second user device using the unicast process, transmit the content including the data blocks subsequent to the initial data block using the multicast process to the second user device.

10. The system of claim 9, wherein the computing device is further configured to:
transmit a multicast identifier to the user devices, wherein
the multicast identifier identifies a multicast group receiving the content over the access network from the computing device, and
the multicast identifier further includes multicast group data packets associated with the data blocks of the content.

11. The system of claim 10, wherein the multicast identifier is a Downstream Service Identifier (DSID), the multicast group is an Internet Protocol (IP) multicast group, and the data blocks of the content are IP packets.

12. The system of any one of claims 9-11, wherein the data blocks of the content are comprised of one or more of: video content, audio content, multimedia content, software modules, web objects, and prepositioned cache content.

13. The system of any one of claims 9-12, wherein the computing device is one of a Termination System, a digital subscriber line access multiplexer, and an optical line terminal.

14. The system of any one of claims 9-13, wherein the computing device is further configured to:
encapsulate unicast data packets associated with the data block of the content currently being transmitted according to a control protocol; and
transmit the encapsulated unicast data packets to the second user device.

15. The system of claim 10, wherein the computing device is further configured to:
store, in the memory of the computing device, a copy of the data block of the content currently being transmitted in the data blocks of the content to the first user device; and
responsive to the data block of the content being transmitted to the first user device, replace the stored copy of the data block of the content with a copy of a next data block of the content being transmitted in the data blocks of the content to the first user device.
